# EUROPEAN PATENT SPECIFICATION

(11) **EP 1 532 014 B1**
(45) Date of publication and mention of the grant of the patent: **30.07.2008**
(21) Application number: 03730982.0
(22) Date of filing: 10.06.2003
(51) Int. Cl.: B60W 30/18, B60W 10/30, B60W 10/06, F16H 61/02, F02B 67/00

(54) **DRIVE MEANS FOR MOTOR VEHICLES**
ANTRIEBSMITTEL FÜR KRAFTFAHRZEUGE
GROUPE MOTOPROPULSEUR POUR AUTOMOBILES

(30) Priority: 11.06.2002 SE 0201793
(43) Date of publication of application: 25.05.2005
(73) Proprietor: VOLVO LASTVAGNAR AB, 405 08 Göteborg (SE)
(72) Inventor: BRÄTHE, Lars, S-417 13 Göteborg (SE); ERIKSSON, Anders, S-413 20 Göteborg (SE); STEEN, Marcus, S-424 33 Angered (SE)
(74) Representative: Fröhling, Werner Otto
(86) International application number: PCT/SE2003/000951
(87) International publication number: WO 2003/104015

(56) References cited:
- WO-A1-01/92048
- DE-A1- 4 339 935

## Description

The present invention relates to a drive means for motor vehicles, comprising an internal combustion engine and, connected to the crankshaft of the engine via a disc clutch, an input shaft of a multi-stage gearbox which has at least one intermediate shaft which is mounted in a casing and has at least one gear wheel in engagement with a gear wheel on the input shaft, a main shaft, mounted in the casing, with gear wheels which engage with gear wheels on the intermediate shaft, at least one gear wheel in each pair of mutually engaging gear wheels on the intermediate shaft and the main shaft being mounted rotatably on its shaft and being lockable on its shaft by engaging means, of which the engaging means for at least some of the forward gears lack synchronisation function, and also operating means which interact with the engaging means and are controlled by a control means, connected to a gear selector, and having a transmission control function and an engine control function, and to which are fed signals representing the selected gear and various engine and vehicle data, which comprise at least engine speed, rotational speed of the transmission input shaft and vehicle speed, and at least one auxiliary unit, which can be coupled by manual and/or automatic switching means can be coupled to or decoupled from a power take-off on the vehicle.

Drive means of this type with automated stepped gearboxes known as autoshift gearboxes have become increasingly common in heavy-duty vehicles as microcomputer technology has developed further and made it possible to use a control computer and a number of actuators, for example servo motors, to precision-regulate engine speed, engagement and disengagement of the clutch and also the engaging means of the gearbox in relation to one another, so that smooth shifting is always obtained even when shifting between unsynchronised gear steps. The synchronisation during shifting is done in this gearbox type by controlling the engine speed. The advantage of this type of automatic gearbox compared with a conventional automatic gearbox constructed with planetary gear stages and with a hydrodynamic torque converter on the input side is, firstly, especially as far as use in heavy-duty vehicles is concerned, that it is simpler and more robust and can be produced at a considerably lower cost than the conventional automatic gearbox, and, secondly, it has greater efficiency, which means that lower fuel consumption is possible. In a gearbox consisting of an unsynchronised stepped main group and a range group the absence of synchronizations reduces costs even further. The absence of synchronization means makes it possible to make the gearbox shorter or, alternatively, with a set length, make the gears wider than in a synchronized gearbox of the same length, to thereby make it possible to transmit higher torque.

Generally, at least three control parameters, namely: engine rpm, torque on the gearbox input shaft and vehicle speed determine when shifting shall occur according to a shifting strategy stored in an engine and transmission control computer. The torque on the gearbox input shaft is equated here with the engine torque, i.e. the load on the engine, which is obtained from sensors indicating the amount of fuel supplied to the engine, for example a flowmeter or sensor indicating accelerator pedal position. When initiating shifting, i.e. disengagement of an engaged gear, the torque transmission between the engine and the gearbox must be as small as possible. Preferably the drive chain should be torqueless to achieve jerk-free disengagement. In to the control computer there are programmed values of how large the supplied fuel amount should be for different shifting points so that the torque on the gearbox input shaft will be close to zero or in any case so low that an engaged gear can be disengaged without any unpleasant jerking. After disengagement of the gear, the control computer controls the engine speed for synchronisation with the rpm of the gear to be engaged. When the rotational speeds have been synchronized, the new gear is engaged.

If one or more auxiliary units, such as a hydraulic pump, air compressor, cooling fan and or AC compressor are coupled to power take offs on the engine before the clutch, the engine torque signal will indicate torque transmission even when the torque transmission between the engine and the gearbox is zero. The torque levels to the auxiliary units must therefore be estimated and festered in the control computer and the engine control must take into account whether one of more auxiliary units are engaged or disengaged.

The auxiliary units can be completely manual, completely automatic or switchable between manual or automatic. An example of the first category would be a hydraulic pump for driving various hydraulic equipment in the vehicle. An air compressor or a cooling fan is usually controlled automatically via a sensor which senses the pressure in a compressed air accumulator or a sensor which senses the engine temperature. An AC compressor can, on the other hand, usually be controlled either manually via manual controls or automatically via automatic controls settable to the desired cab temperature.

If the operating state of the auxiliary equipment is changed after the transmission control computer has initiated shifting, but before the synchronisation of the engine speed with the rotational speed for the selected gear has been completed, the engine speed control will be affected, making it imprecise or slow.

DE4339935 discloses main features in the preamble of claim 1. DE4339935 discloses a drive motor vehicle which comprises an auxiliary unit in form of an AC compressor, which by means of manual and/or automatic switching means can be engaged to or disengaged from a power take off on the engine. The control means are arranged, at initiation of shifting to take over from the switching means the control of the disengagement of the auxiliary unit and, upon completed shifting to allow the controlling of the auxiliary unit to return to the associated switching means.

A general purpose of the present invention is to achieve a motor vehicle drive unit of the type described by way of introduction, which permits a more rapid and exact control of the engine speed during shifting.

This is achieved according to the invention by virtue of the fact that the control means are arranged, at the beginning of shifting to a higher gear, involving a drop in engine speed, to control all of the auxiliary units, if the circumstances permit, to load the engine maximally.

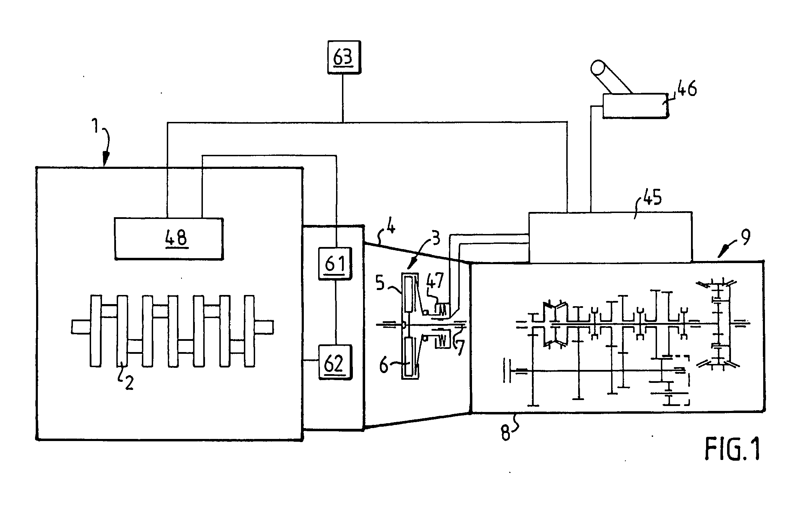

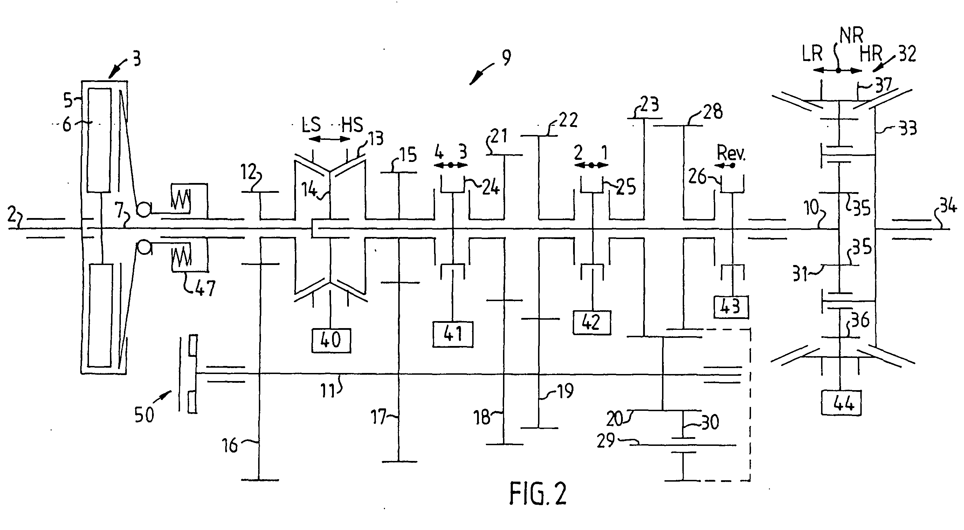

The invention will be described in more detail with reference to examples shown in the accompanying drawings, where Fig. 1 shows a schematic representation of a drive unit according to the invention and Fig. 2 shows the clutch and the gearbox of Fig. 1 on a larger scale.

In Fig. 1, 1 designates a six-cylinder internal combustion engine, e.g. a diesel engine, the crankshaft 2 of which is coupled to a single-disc dry-disc clutch, gene-rally designated 3, which is enclosed in a clutch bell 4. Instead of a single disc clutch, a dual disc clutch can be used. The crankshaft 2 is solidly joined to the clutch housing 5, while its disc 6 is solidly joined to an input shaft 7 (Fig. 2) which is rotatably mounted in the housing 8 of a gearbox, generally designated 9. A main shaft 10 (Fig. 2) and an intermediate shaft 11 (Fig. 2) are rotatably mounted in the housing 8.

As is most clearly evident from Fig. 2, a gear 12 is rotatably mounted on the input shaft 7 and can be locked to such shaft with the aid of an engaging sleeve 13 provided with synchronizing means. Said engaging sleeve 13 is non-rotatably but axially displaceably mounted on a hub 14 non-rotatably connected to the input shaft. With the aid of the engaging sleeve 13, a gear 15, rotatably mounted on the main shaft 10, is lockable relative to the input shaft 7. The gears 12 and 15, respectively, engage gears 16 and 17, respectively, which are non-rotatably joined to the intermediate shaft 11. Additional gears 18, 19 and 20, respectively, are non-rotatably joined to the intermediate shaft 11 and engage gears 21, 22 and 23, respectively, on the main shaft 10 and lockable to the main shaft with the aid of engaging sleeves 24 and 25, respectively, which in the example shown do not have synchronizing means. On the main shaft 10, an additional gear 28 is rotatably mounted and engages an intermediate gear 30 rotatably mounted on a separate shaft 29. The intermediate gear 30 engages in turn an intermediate shaft gear 20. The gear 28 is lockable to its shaft with the aid of an engaging sleeve 26.

The gear pairs 12, 16 and 15, 17 and the engaging sleeve 13 form a splitter group with a low stage LS and a high stage HS. The gear pair 15, 17 together with the gear pairs 21, 18, 22, 19, 23, 20 and 28, 30 form a main group with four speeds forward and one reverse. At the output end of the main shaft 10, a gear 31 is non-rotatably mounted to form the sun gear in a two-range group of planetary type, generally designated 32, the planet carrier 33 of which is non-rotatably mounted to a shaft 34, forming the output shaft of the gearbox. The planet gears 35 of the range group 32 engage a ring gear 36 which, with the aid of an engaging sleeve 37, can be locked relative to the gearbox housing 8 for low range LR and relative to the planet carrier 33 for high range HR. The engaging sleeve 37 also has a neutral position NR lying between low range LR and high range HR, in which neutral position the output shaft 34 is released from the main shaft 10.

The engaging sleeves 13, 24, 25, 26 and 37 are displaceable as indicated by the arrows in Fig. 2, providing the gear positions indicated above the arrows. Displacement is achieved by servo means 40, 41, 42, 43 and 44, schematically indicated in Fig. 2, which can be pneumatically operated piston-cylinder devices of the type used in a gearbox of the above described type, which is marketed under the name Geartronic^{®}. The servo means are controlled by an electronic control unit 45 (Fig. 1), comprising a microcomputer depending on signals fed into the control unit representing various engine and vehicle data, including at least engine speed, vehicle speed, clutch and accelerator pedal position and, where applicable, engine brake on-off, when an electronic gear selector 46 coupled to the control unit 45 is in its automatic position. When the selector is in its position for manual shifting, the shifting occurs at the command of the driver via the gear selector 46. The control unit 45 also controls the fuel injection, i.e. the engine speed, depending on the accelerator pedal position and the air supply to a pneumatic piston-cylinder device 47, by means of which the clutch 3 is engaged and disengaged.

The transmission control unit 45 is programmed in a known manner so that the clutch 3 is held engaged when the vehicle is standing still and the gear selector 46 is in the neutral position. This means that the engine is driving the input shaft 7 and thus also the intermediate shaft 11, while the output shaft 34 is disengaged. Supplementary apparatus driven by the intermediate shaft, e.g. an oil pump for lubricating the gearbox, is driven in this position. The control unit 45 is also programmed, when the vehicle is standing still and then brake the intermediate shaft 11 to stop with the aid of the intermediate shaft brake 50 indicated in Fig. 2 , and which can be a braking device of a type known per se and controlled by the control unit 45. With the intermediate shaft 11 braked to stop or at least nearly to stop, the control unit 45 now initiates shifting in the main group a starting off gear which provides the total gear ratio selected by the automatic transmission or by the driver. When the driver, after engagement of the selected starting off gear, e.g. first gear, depresses the accelerator, the accelerator pedal will function as a reversed clutch pedal, which, via the transmission control unit successively increases the clutch engagement with increasing throttle opening.

When shifting- initiated either directly by the driver or by automatic control means in accordance with a gear selection strategy stored in the transmission control unit 45, which can take into account hw the vehicle surroundings will appear in the immediate future, the transmission control unit 45 first controls the engine control unit 48 to regulate the fuel supply to the engine, so that a torqueless or practically torqueless state is created in the vehicle drive chain. In other words, the torque transmission from the engine crankshaft 2 to the input shaft 7 of the gearbox 9 must be zero or at least practically zero. The transmission control unit 45 receives continuous information on, and registers the current engine torque via, the amount of fuel injected.

61 designates generally one or more auxiliary units, which are driven from one or more engine driven/engine mounted power take-offs 62 before the clutch 3. The auxiliary units 61, for example a hydraulic pump, a cooling fan, a generator, an air compressor or an AC compressor, can be engaged to be driven by the engine or can be disengaged by manual and/or automatic controls 63 coupled to the engine control unit 48. If one or more auxiliary units 61 are engaged via the controls 63 the engine load will be increased and more fuel will be required for synchronisation than if no auxiliary unit were engaged and the torque levels. The transmission control unit 45 can compute the torque levels for these and can direct the engine control unit 48 to regulate the fuel amount to the engine towards zero torque to the transmission input shaft when disengaging the current gear and for speed synchronisation with the gearbox speed for the new gear.

In order to prevent automatic or unintentional manual switching of one or more controls 63 from being able to engage or disengage one or more auxiliary units 61, from initiation of shifting until the synchronisation has been completed, which would affect the engine control during the shifting process and make it imprecise or slower than otherwise, the transmission control unit 45 is programmed according to the invention to take over, with an override function, control of the auxiliary units 61 from the controls 63 from initiation of shifting until completion of shifting. Thereafter the transmission control unit 45 returns control of the auxiliary units to the controls 63.

This can means that in one embodiment the transmission control unit 45 is programmed to hold all auxiliary units 61 in the operational state which they are in when the shifting has been initiated, and lift the hold upon complete shifting.

In a preferred further development of the present invention, the transmission control unit 45 is programmed to actively control the auxiliary units 61 to achieve a more rapid shifting than when the auxiliary units 61 as described above are merely held in their current operating state. The transmission control unit 45 is programmed to load, when shifting up, the engine with as many auxiliary units 61 as are suitable with regard to operating conditions. For example it may be unsuitable to engage an air compressor, if there is maximum pressure in the associated pressure accumulator. Conversely, the transmission control unit 45 is programmed when downshifting to disengage as many auxiliary units 61 as suitable with regard to operating conditions. Here, for example, it can be unsuitable to disengage a cooling fan if the engine temperature is higher than normal.

## Claims

1. Drive unit for motor vehicles, comprising an internal combustion engine (1) and a step gearbox input shaft (7) connected via a disc clutch (3) to the engine crankshaft (2), said step gearbox (9) having at least one intermediate shaft (11) mounted in a housing, said intermediate shaft (11) having at least one gear (16, 17) in engagement with a gear (12, 15) on the input shaft, a main shaft (10) which is mounted in the housing and has gears (15, 21, 22, 23) engaging gears (17,18, 19, 20) on the intermediate shaft, at least one gear in each pair of interengaging gears on the intermediate shaft and the main shaft being rotatably mounted on its shaft and lockable by engaging means (13, 24, 25) of which at least some forward gears lack a synchronization function, and operating means (40,41,42), cooperating with the engaging means and being controlled by control means (45,48) which are connected to a gear selector (46) and have transmission control function and engine control function, signals being fed into said control means representing the selected gear and various engine and vehicle data, at least including engine speed, gearbox input shaft speed and vehicle speed, and at least one auxiliary unit (61), which, by means of manual and/or automatic switching means (63), can be engaged to or disengaged from a power takeoff (62) on the engine, and where said control means (45, 48) are arranged, at initiation of shifting to take over from the switching means (63) the control of the engagement or disengagement of the auxiliary unit (61) and, upon completed shifting to allow the controlling of the auxiliary unit to return to the associated switching means, **characterized in that** said control means (45,48) are disposed, upon initiation of shifting to a higher gear than the current gear, regardless of the settings of said switch means (63), to control the auxiliary unit (61) to load the engine.

2. Drive unit according to claim 1, **characterized in that** said control means (45, 48) are disposed to control the auxiliary unit (61) to maximally load the engine.

3. Drive unit according to claim 1 or 2, **characterized in that** said control means (45,48) comprise a transmission control unit (45) and an engine control unit (48) which communicate with each other.

## Patentansprüche

1. Antriebseinheit für Motorfahrzeuge mit einem Verbrennungsmotor (1) und einer Stufengetriebe-Eingangswelle (7), die über eine Scheibenkupplung (3) mit der Motorkurbelwelle (2) verbunden ist, wobei das Stufengetriebe (9) wenigstens eine in einem Gehäuse angebrachte Zwischenwelle (11) aufweist, wobei die Zwischenwelle (11) wenigstens ein Zahnrad (16, 17) aufweist, das mit einem Zahnrad (12, 15) auf der Eingangswelle in Eingriff steht, mit einer Hauptwelle (10), die in dem Gehäuse angebracht ist und Zahnräder (15, 21, 22, 23) aufweist, die mit Zahnrädern (17, 18, 19, 20) auf der Zwischenwelle in Eingriff stehen, wobei wenigstens ein Zahnrad in jedem Paar miteinander in Eingriff stehender Zahnräder auf der Zwischenwelle und der Hauptwelle drehbar auf seiner Welle angebracht und durch Eingriffseinrichtungen (13, 24, 25) sperrbar ist, von denen wenigstens einige Vorwärtszahnräder keine Synchronisationsfunktion aufweisen, und mit einer Betätigungseinrichtung (40, 41, 42), die mit den Eingriffseinrichtungen zusammenwirkt und durch Steuereinrichtungen (45, 48) gesteuert wird, die mit einer Gangwahleinrichtung (46) verbunden sind und eine Getriebesteuerfunktion und eine Motorsteuerfunktion aufweisen, wobei den Steuereinrichtungen Signale zugeführt werden, die den gewählten Gang und verschiedene Motorfahrzeugdaten repräsentieren, die wenigstens die Motordrehzahl, die Drehzahl der Getriebeeingangswelle und die Fahrzeuggeschwindigkeit umfassen, und wenigstens eine Hilfseinheit (61), die mittels einer manuellen und/oder automatischen Umschalteinrichtung (63) mit einem Leistungsabtrieb (62) des Motors in Eingriff gebracht oder von diesem ausgerückt werden kann, und wobei die Steuereinrichtungen (45, 48) so konfiguriert sind, dass sie bei einer Initiierung des Schaltens die Steuerung des Eingriffs oder des Ausrückens der Hilfseinheit (61) von der Umschalteinrichtung (63) übernehmen, und nach vollendetem Schalten ermöglichen, dass die Steuerung der Hilfseinheit wieder an die zugeordnete Umschalteinrichtung zurückgeht, **dadurch gekennzeichnet, dass** die Steuereinrichtungen (45, 48) so konfiguriert sind, dass sie nach Initiierung des Schaltens auf einen höheren Gang als der momentane Gang unabhängig von den Einstellungen der Umschalteinrichtung (63) die Hilfseinheit (61) so steuern, dass der Motor belastet wird.

2. Antriebseinheit nach Anspruch 1, **dadurch gekennzeichnet, dass** die Steuereinrichtungen (45, 48) so ausgelegt sind, dass sie die Hilfseinheit (61) so steuern, dass der Motor maximal belastet wird.

3. Antriebseinheit nach Anspruch 1 oder 2, **dadurch gekennzeichnet, dass** die Steuereinrichtungen (45, 48) eine Getriebesteuereinheit (45) und eine ' Motorsteuereinheit (48) umfassen, die miteinander kommunizieren.

## Revendications

1. Unité d'entraînement pour des véhicules à moteur, comportant un moteur à combustion interne (1) et un arbre d'entrée de boîte de vitesses étagée (7) raccordé via un embrayage à disque (3) au vilebrequin de moteur (2), ladite boîte de vitesses étagée (9) ayant au moins arbre intermédiaire (11) monté dans un carter, ledit arbre intermédiaire (11) ayant au moins un engrenage (16, 17) en prise avec un engrenage (12, 15) sur l'arbre d'entrée, un arbre principal (10) qui est monté dans le carter, et qui a des engrenages (15, 21, 22, 23) venant en prise avec des engrenages (17, 18, 19, 20) sur l'arbre intermédiaire, au moins un engrenage dans chaque paire d'engrenages venant mutuellement en prise sur l'arbre intermédiaire et l'arbre principal étant monté de manière rotative sur son arbre, et verrouillable par des moyens de mise en prise (13, 24, 25) dont au moins certains engrenages de marche avant manquent d'une fonction de synchronisation, et des moyens d'actionnement (40, 41, 42) coopérant avec les moyens de mise en prise, et étant commandés par des moyens de commande (45, 48) qui sont reliés à un sélecteur de vitesse (46) et ont une fonction de commande de transmission et une fonction de commande de moteur, des signaux étant alimentés dans lesdits moyens de commande, représentant la vitesse sélectionnée et diverses données de moteur et de véhicule, comportant au moins la vitesse moteur, la vitesse d'arbre d'entrée de la boîte de vitesses et la vitesse du véhicule, et au moins une unité auxiliaire (61) qui, par l'intermédiaire de moyens de commutation manuels et/ou automatiques (63), peut être mise en prise ou libérée par rapport à une prise de force (62) sur le moteur, et où lesdits moyens de commande (45, 48) sont agencés, au début du changement de vitesse, pour reprendre aux moyens de communication (63) la commande de la mise en prise ou la libération de l'unité auxiliaire (61) et, lors de l'achèvement du changement de vitesse, pour permettre à la commande de l'unité auxiliaire de retourner aux moyens de commutation associés, **caractérisée en ce que** lesdits moyens de commande (45, 48) sont disposés, au début du changement de vitesse vers une vitesse supérieure à la vitesse en cours, indépendamment des réglages desdits moyens de communication (63), pour commander l'unité auxiliaire (61) pour mettre le moteur en charge.

2. Unité d'entraînement selon la revendication 1, **caractérisée en ce que** lesdits moyens de commande (45, 48) sont disposés de manière à commander l'unité auxiliaire (61) pour charger le moteur au maximum.

3. Unité d'entraînement selon la revendication 1 ou 2, **caractérisée en ce que** lesdits moyens de commande (45, 48) comportent une unité de commande de transmission (45) et une unité de commande de moteur (48) qui communiquent l'une avec l'autre.
